Europäisches Patentamt

European Patent Office

Office européen des brevets

(19)

(11) EP 0 836 289 B1

(12) **FASCICULE DE BREVET EUROPEEN**

(45) Date de publication et mention
de la délivrance du brevet:
**22.12.2004 Bulletin 2004/52**

(51) Int Cl.⁷: $H04B\ 7/185$

(21) Numéro de dépôt: **97402328.5**

(22) Date de dépôt: **03.10.1997**

(54) **Transfert d'une communication dans une constellation de satellites non-géostationnaires**

Übergabe einer Verbindung in einer nicht-geostationären Satelliten-Konstellation

Transfer of a communication in a non-geostationary satellite constellation

(84) Etats contractants désignés:
**DE GB IT**

(30) Priorité: **08.10.1996 FR 9612349**

(43) Date de publication de la demande:
**15.04.1998 Bulletin 1998/16**

(73) Titulaire: **FRANCE TELECOM SA**
**75015 Paris (FR)**

(72) Inventeurs:
• **Maral, Gérard**
**31120 Goyrans (FR)**
• **Restrepo, Joaquin**
**56006 Medellin (CO)**

(74) Mandataire: **Cabinet Martinet & Lapoux**
**43, boulevard Vauban,**
**B.P. 405 Guyancourt**
**78055 St. Quentin Yvelines Cédex (FR)**

(56) Documents cités:
**EP-A- 0 637 142**

• **KWOK K F ET AL: "Channel borrowing techniques with reservation pool for LEO satellite land mobile communication systems" FIFTH INTERNATIONAL CONFERENCE ON SATELLITE SYSTEMS FOR MOBILE COMMUNICATIONS AND NAVIGATION (CONF. PUBL.NO.424), FIFTH INTERNATIONAL CONFERENCE ON SATELLITE SYSTEMS FOR MOBILE COMMUNICATIONS AND NAVIGATION (CONF. PUBL.NO.424), LONDON, UK, 13-15 MAY , ISBN 0-85296-658-X, 1996, LONDON, UK, IEE, UK, pages 129-132, XP002034767**
• **RESTREPO J ET AL: "Coverage concepts for satellite constellations providing communications services to fixed and mobile users" SPACE COMMUNICATIONS, 1995, IOS PRESS, NETHERLANDS, vol. 13, no. 2, ISSN 0924-8625, pages 145-157, XP000677761**

## Description

La présente invention concerne, de manière générale, les constellations de satellites non-géostationnaires dans des systèmes de télécommunications avec cellules rattachées au satellite.

Plusieurs projets de constellations de satellites non-géostationnaires proposent d'offrir des services de télécommunications de type circuits, tels que la téléphonie, la télécopie et la transmission de données à des usagers mobiles. Ces projets sont notamment le projet IRIDIUM (marque déposée) de la société américaine MOTOROLA, le projet GLOBALSTAR (marque déposée) de la société américaine LORAL SPACE SYSTEMS, le projet ICO proposé par la société INMARSAT et le projet ODYSSEY (marque déposée) de la société américaine TRW.

Dans ces constellations, les satellites sont équipés d'antennes multifaisceaux. Chaque faisceau définit sur la surface de la terre un contour délimitant une couverture appelée "cellule". En l'absence de dispositif particulier de pointage variable dans le temps des antennes, les faisceaux, et donc les cellules associées, conservent une position fixe par rapport au corps du satellite. Ce concept porte donc le nom de système satellitaire à cellule rattachée au satellite ("satellite-fixed cell" en anglais). En raison du défilement des satellites, les cellules se déplacent à la surface de la Terre, et les communications en cours doivent changer de cellule lorsque la durée de la communication dépasse le temps de passage de la cellule au-dessus de l'usager. Ce changement de cellule est appelé transfert de communication de faisceau à faisceau ("beam handover" en anglais). Eventuellement les communications doivent être transférées d'un satellite au suivant ("satellite handover").

Lors de ces transferts, il se peut que la cellule ou le satellite prenant en charge la communication en cours ne dispose d'aucun canal libre, et la communication est alors interrompue ("forced call termination" en anglais). Les usagers munis de téléphones mobiles desservis actuellement par les réseaux cellulaires terrestres rencontrent le même problème, mais en raison de la mobilité des usagers. Pour les usagers fixes des réseaux cellulaires terrestres qui restent dans la même cellule pendant toute la durée de leur communication, il n'y a pas de transfert de communication d'une cellule à l'autre, donc pas d'interruption de communication. Etant donné que les constellations de satellites non-géostationnaires ont pour objectif de constituer une extension du service cellulaire terrestre, il serait souhaitable de pouvoir offrir une qualité de service équivalente à celle des réseaux cellulaires terrestres. En outre, ces constellations pourront éventuellement fournir des services de communications aux usagers fixes. Pour offrir aux usagers fixes une qualité équivalente à celle des systèmes terrestres ou des systèmes à satellites géostationnaires, il faut éviter à ces usagers fixes toute interruption de communication due aux transferts de cellule à cellule résultant du mouvement des satellites.

Les constellations de satellites non-géostationnaires envisagées à ce jour sont prévues pour offrir des services de communications aux usagers mobiles, et pourront offrir des services aux usagers fixes, mais sans garantir aux usagers mobiles ou fixes la réussite des transferts de communications de faisceau à faisceau ou de satellite à satellite. Cela signifie que la qualité du service offert aux usagers fixes dans ces constellations sera inférieure à celle fournie par d'autres systèmes de télécommunications tels qu'à faisceaux hertziens, fibres optiques, satellites géostationnaires, etc. Cet inconvénient fait de ces constellations une alternative peu intéressante pour les usagers fixes.

Selon la demande de brevet européen EP-0637142, dans un réseau de cellules couvert par une constellation de satellites non-géostationnaires pour des terminaux d'abonné mobiles établissant des communications via les satellites et des stations terrestres reliés au réseau téléphonique public, la position de chaque terminal mobile est localisée en permanence, par exemple par GPS et une trajectoire est prédite en correspondance à une durée correspondant à la longueur d'une liste de cellules intra-satellites et extra-satellites que le terminal mobile est susceptible de traverser, la liste étant déterminée en fonction de la durée moyenne d'une communication. Cette demande de brevet divulgue un transfert d'une cellule à une autre de la communication en cours, effectué d'une manière classique, lorsque la puissance du signal reçu dans la cellule courante atteint un seuil prédéterminé, ou bien sous la commande du réseau lorsque le terminal mobile atteint la limite de la cellule courante, ou lorsque la communication est susceptible d'être perdue.

Un procédé pour garantir la continuité des communications des usagers lors des transferts de communications de faisceau à faisceau ou de satellite à satellite dans les systèmes à constellations de satellites non-géostationnaires consiste à réserver, lors de la demande d'établissement d'une communication par un usager, un canal dans chacune des cellules que cet usager est appelé à traverser pendant la communication. Mais outre le fait qu'il est difficile de prévoir la durée exacte d'une communication, et donc le nombre de cellules concernées, ce procédé conduit à un surdimensionnement inutile de la capacité du satellite.

La présente invention vise à remédier aux inconvénients précités et garantir la réussite des transferts des communications d'usagers dans une constellation de satellites non-géostationnaires, pendant des durées respectives définies à l'avance par ces usagers, tout en réservant le nombre de canaux strictement nécessaire, et pendant le temps minimal, dans les cellules que les usagers traversent.

A cette fin, un procédé de transfert de communications d'usagers dans un système de télécommunications cellulaire à constellation de satellites non-géostationnaires avec cellules rattachées aux satellites, est tel que caractérisé selon la revendication 1.

Suite à la demande d'établissement de communication, l'usager donné se trouvant d'abord dans la première cellule du groupe prédéterminé, une réservation de canal de communication est donc effectuée dans cette cellule ainsi qu'éventuellement dans des cellules adjacentes du groupe prédéterminé proches de la première cellule, si au moins un canal de communication est disponible dans chacune de ces cellules. Une demande de réservation de canal de communication est ensuite effectuée dans chacune des autres cellules du groupe prédéterminé, qui sont plus éloignées de la première cellule, seulement lorsque l'usager se trouve à la distance prédéterminée correspondante de son point de transfert dans cette cellule. Le procédé de l'invention minimise le temps pendant lequel les canaux de communication sont réservés.

Par ailleurs, si aucun refus d'établissement de communication ne survient pour l'usager donné, les transferts d'une communication consécutive à la demande d'établissement de communication précitée seront garantis.

Le procédé conforme à l'invention s'applique aux usagers mobiles, dans la mesure où leur vitesse est suffisamment faible par rapport à la vitesse de défilement des cellules relativement à la surface de la Terre. Cette condition est réalisée pour les constellations de satellites non-géostationnaires envisagées. La vitesse de défilement des cellules relativement à la surface de la terre est en effet de 7 km/s pour les constellations en orbite basse, c'est-à-dire de 500 à 2000 km d'altitude, et de 1 à 2 km/s pour les constellations en orbite intermédiaire, de 10000 à 20000 km d'altitude. La plupart des mobiles tels que piétons, mobiles terrestres et maritimes et aéronefs subsoniques sont ainsi concernés par ce procédé.

De préférence, selon l'invention, ledit nombre d'usagers en cours de communication concerne seulement des usagers dont les groupes prédéterminés de cellules adjacentes incluent ladite chaque cellule. Dans ce cas, ledit nombre d'usagers en cours de communication est toujours inférieur ou égal à la capacité en canaux de communication de ladite chaque cellule. Les usagers concernés ici sont soit des usagers susceptibles d'être ultérieurement affectés à ladite chaque cellule et n'ayant encore demandé aucune réservation de canal dans cette cellule, soit des usagers non encore affectés dans cette cellule mais ayant demandé une réservation de canal dans celle-ci, soit des usagers utilisant déjà un canal de ladite chaque cellule.

Selon une variante du procédé, si, lors de la demande d'établissement de communication émise par le terminal de l'usager donné, la première distance entre l'usager donné et le point de transfert prédéterminé dans ladite chaque cellule est supérieure à la distance prédéterminée, la réservation d'un canal de communication n'est demandée que si un nombre d'usagers en cours de communication inclus dans une zone obtenue par translation de ladite chaque cellule suivant la direction prédéterminée de la première distance et si les groupes prédéterminés de cellules respectivement auxquels lesdits usagers en cours de communication dans ladite zone sont susceptibles d'être affectés incluent de préférence ladite chaque cellule, est inférieur à la capacité en canaux de communication de ladite chaque cellule.

Le groupe prédéterminé de cellules adjacentes peut être constitué d'une part de sorte que l'usager donné ne soit transféré dans ladite chaque cellule, lorsque ladite chaque cellule est une cellule autre que la première cellule du groupe prédéterminé, qu'après être resté affecté le plus longtemps possible à une cellule précédente, et d'autre part de sorte que lorsque, en sortie d'une cellule du groupe prédéterminé, l'usager donné est inclus simultanément dans plusieurs cellules du système de télécommunications, la cellule parmi lesdites plusieurs cellules à laquelle l'usager donné est affecté soit celle dans laquelle le temps de passage de l'usager donné est le plus long. De cette manière, le nombre de transferts à réaliser pour l'usager donné au cours d'une communication consécutive à sa demande d'établissement de commmunication est minimisé.

Typiquement, le nombre de cellules incluses dans le groupe prédéterminé de cellules dépend d'une durée préalablement définie, par exemple par l'usager donné, au cours de laquelle le procédé est appliqué pour l'usager donné après chaque demande d'établissement de communication émise par le terminal de l'usager donné.

Selon une seconde réalisation de l'invention, le procédé comprend en outre une étape pour supprimer préalablement dans chacune des cellules du système de télécommunications au moins une zone de chevauchement avec une autre cellule de ce même système de télécommunications.

Selon une troisième réalisation de l'invention, les cellules sont identiques, de forme rectangulaire et alignées relativement à la direction prédéterminée, et lesdites secondes étapes sont supprimées.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 représente deux satellites d'une constellation de satellites non-géostationnaires placés sur une même orbite et des cellules rattachées à ces satellites ;
- la figure 2 est un algorithme de transfert de communication conforme à des première et seconde réalisations de la présente invention ;
- les figures 3A et 3B montrent respectivement des cellules susceptibles d'être traversées par un usager pendant une communication, et des cellules auxquelles l'usager sera susceptible d'être affecté pendant cette communication ;

- la figure 4 est un diagramme de zones obtenues par translation d'une cellule d'affectation de l'usager utilisées dans l'algorithme de la figure 2 ;
- la figure 5 est un diagramme pour déterminer une distance maximale dans une cellule, utilisée dans l'algorithme de la figure 2 ;
- les figures 6A et 6B sont respectivement des diagrammes de deux configurations de position de l'usager par rapport à une cellule d'affectation ;
- la figure 7 est un diagramme pour réduire une cellule selon une seconde réalisation de l'invention ;
- la figure 8 est un diagramme de zones obtenues par translation d'une cellule d'affectation réduite selon la seconde réalisation ;
- la figure 9 représente des cellules identiques rectangulaires utilisées dans une troisième réalisation de l'invention ;
- la figure 10 est un algorithme de transfert de communication conforme à la troisième réalisation de l'invention ; et
- la figure 11 illustre des cellules rattachées à des satellites se déplaçant suivant des directions différentes.

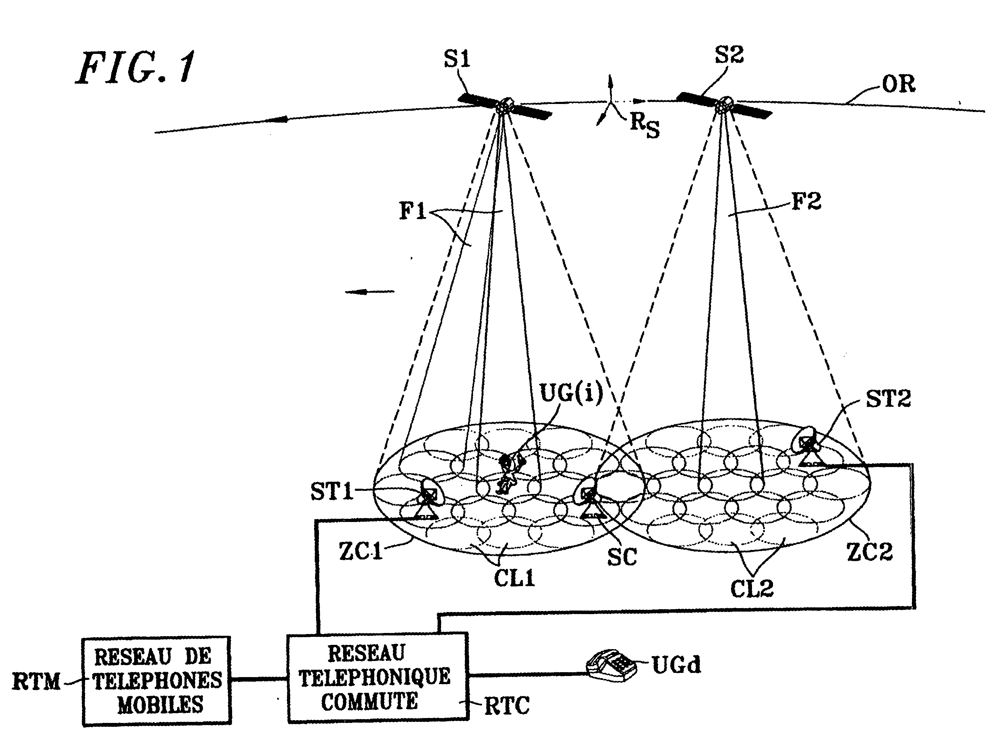

En référence à la figure 1, des satellites S1 et S2 défilent autour de la Terre sur une même orbite basse ou intermédiaire OR à une vitesse relative constante connue $V_S$ par rapport à la surface de la Terre. Les satellites S1 et S2 appartiennent à une constellation de satellites non-géostationnaires comprenant typiquement plusieurs orbites et plusieurs satellites par orbite. Selon le projet IRIDIUM (marque déposée) de la société américaine MOTOROLA par exemple, la constellation de satellites non-géostationnaires est constituée de 66 satellites répartis en 6 plans d'orbite à une altitude de 787 km.

Plusieurs faisceaux d'antenne F1, F2 de chaque satellite S1, S2 définissent à la surface de la Terre respectivement des contours délimitant des zones de couverture dites cellules CL1, CL2. Les cellules CL1, CL2 sont rattachées au satellite S1, S2 et se déplacent donc à la surface de la Terre. Les contours des cellules CL1, CL2 correspondent à des valeurs constantes d'un paramètre radioélectrique, par exemple le gain, associé aux antennes du satellite S1, S2. Le satellite S1, S2 couvre une zone de couverture totale ZC1, ZC2 constituée de la réunion des cellules CL1, CL2.

Des stations terriennes ST1 et ST2 fixes par rapport à la Terre émettent et reçoivent des signaux de communication afin d'échanger des informations entre des réseaux terrestres, tels que le réseau téléphonique commuté RTC ou un réseau terrestre de téléphones mobiles RTM, et les satellites S1 et S2 de la constellation de satellites non-géostationnaires. Ainsi, lorsqu'un usager fixe ou mobile donné UG(i) situé dans la zone de couverture totale ZC1 du satellite S1, et plus particulièrement dans une cellule CL1, disposant d'un terminal capable d'émettre et de recevoir des signaux radioélectriques, souhaite établir une communication par exemple avec un usager UGd du réseau téléphonique commuté RTC, une demande d'établissement de communication est émise par le terminal de l'usager fixe ou mobile UG(i) via un canal de signalisation montant d'un faisceau F1 vers le satellite S1 puis retransmise vers une station terrienne ST1 reliée au réseau téléphonique commuté RTC afin d'être transmise au terminal de l'usager fixe demandé UGd. Pendant une communication entre les terminaux des usagers UG(i) et UGd, consécutives à la demande d'établissement de communication précitée, des cellules CL1, CL2 se déplaçant à la surface de la Terre passent successivement au-dessus de l'usager UG(i) si la durée de la communication excède le temps de passage de l'usager UG(i) dans une cellule. Le procédé selon l'invention assure le transfert de cette communication en cours d'une cellule à la suivante sans interruption de celle-ci.

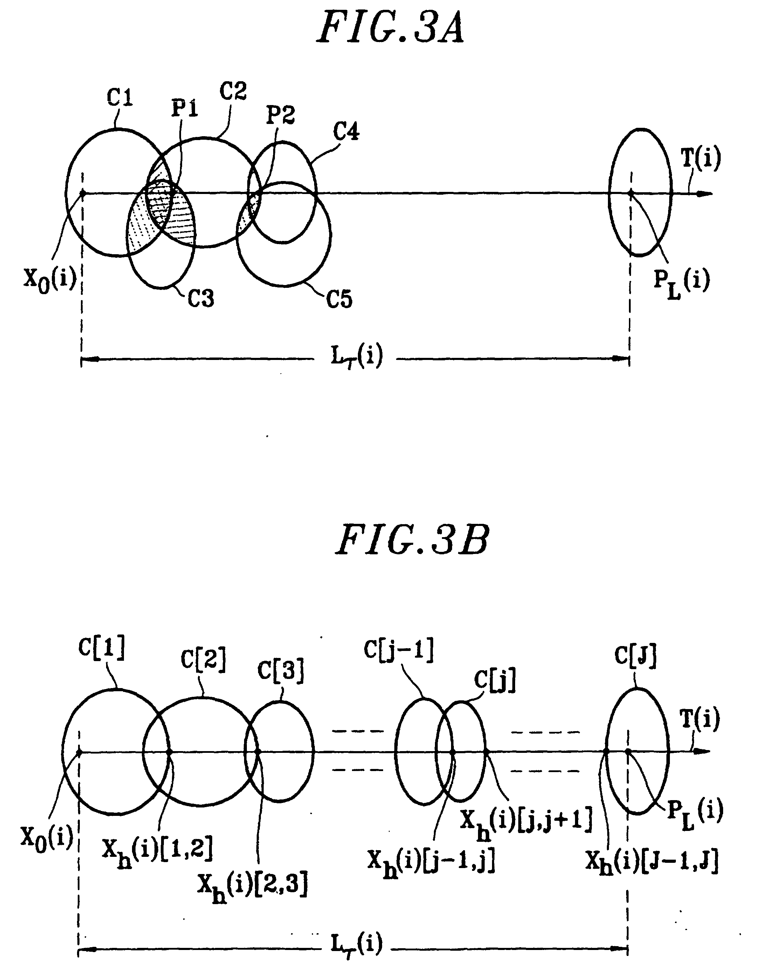

Dans la suite de la description, tous les déplacements sont considérés dans un référentiel $R_s$ fixe par rapport aux satellites. Dans le référentiel $R_s$, les satellites sont fixes, et l'usager UG(i), dont la vitesse relativement à la surface de la terre est négligée, se déplace selon une trajectoire rectiligne T(i), illustrée à la figure 3A, suivant une direction opposée à la direction de défilement des satellites relativement à la surface de la Terre. La trajectoire rectiligne T(i) dépend des vitesses des satellites et de la rotation de la Terre, ainsi que de la position initiale $X_0(i)$ de l'usager UG(i) lors d'une demande d'établissement de communication effectuée par le terminal de celui-ci. Cette position initiale $X_0(i)$ est supposée connue.

A des fins de simplification, on considère seulement ci-après les distances parcourues par l'usager UG(i) dans les cellules au lieu des temps de passage dans ces cellules. La conversion temps-distance est donnée par :

$$X(i) = V_S \, t$$

où X(i) est la distance parcourue par l'usager UG(i) pendant la durée t et $V_S$ la vitesse précitée des satellites relativement à la surface de la terre.

Selon l'invention, l'usager UG(i) a préalablement souscrit à un service "à transferts garantis" ATG décrit ci-après. A cet effet, l'usager UG(i) a défini une durée de communication maximale prédéterminée $\tau(i)$ au cours de laquelle le service ATG lui est appliqué pour chaque communication avec un autre usager. La durée $\tau(i)$, dite durée prédéterminée maximale de transferts garantis, correspond selon la conversion temps-distance ci-dessus à une distance prédéterminée maximale de transferts garantis $L_\tau(i) = V_S\tau(i)$. Si la durée d'une communication de l'usager UG(i) dépasse la durée maximale $\tau(i)$, l'usager UG(i) ne bénéficie plus du service ATG pendant le temps restant de la communication.

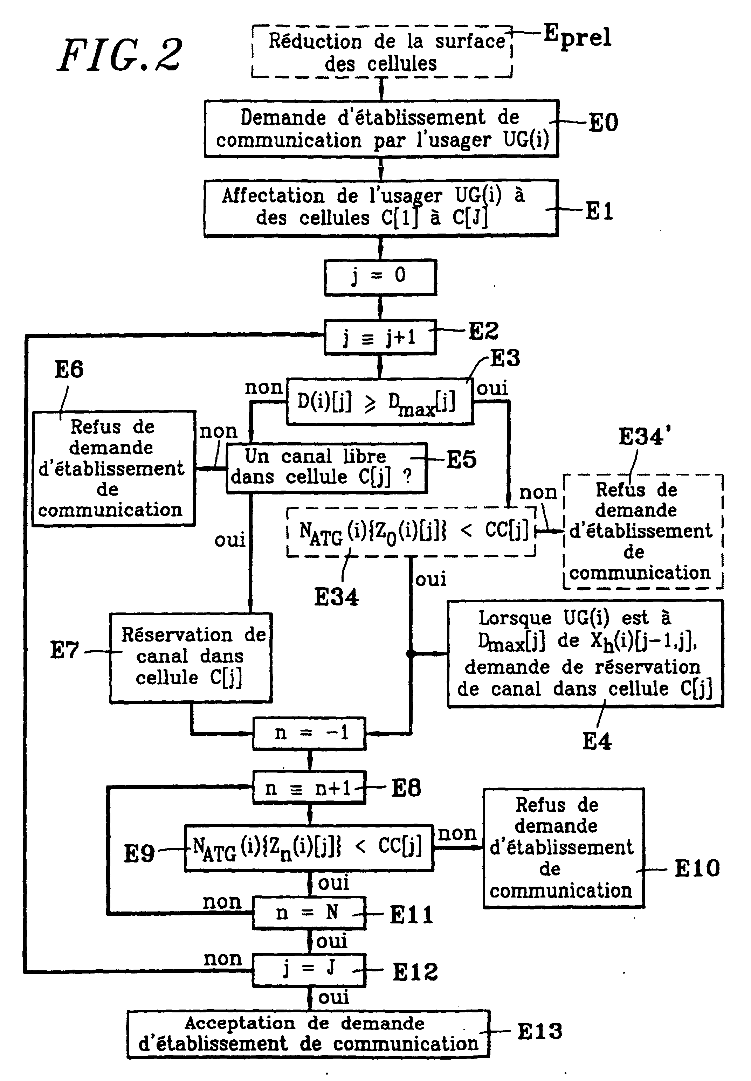

La figure 2 est un algorithme du procédé conforme à l'invention mis en oeuvre pour un usager ayant souscrit au service ATG, dénommé ci-après "usager ATG". L'algorithme est implanté en partie dans une station terrienne de commande SC ou dans un satellite de la constellation, et en partie dans le terminal de l'usager ATG.

L'algorithme comprend notamment, selon une première réalisation, une étape initiale E1, une étape de demande de réservation de canal E4 et une étape de réservation de canal E7, des étapes de test E5 et E9, et une étape finale sous la forme d'une acceptation de demande d'établissement de communication E13 ou d'un refus de demande d'établissement de communication E6 ou E10.

L'étape E1, qui succède à une demande d'établissement de communication émise par le terminal de l'usager UG(i) à une étape E0, consiste à déterminer préalablement les cellules auxquelles l'usager UG(i) sera affecté pendant une communication consécutive à la demande d'établissement de communication précitée. En effet, les cellules présentent entre elles des zones de chevauchement dans lesquelles les usagers peuvent être affectés à plusieurs cellules différentes en un point donné de leur trajectoire, c'est-à-dire dans lesquelles les usagers peuvent utiliser des canaux de communication de plusieurs cellules. L'étape E1 a pour rôle d'affecter préalablement l'usager UG(i) à un groupe de cellules successivement traversées par sa trajectoire T(i) en minimisant le nombre de transferts de l'usager d'une cellule à l'autre à réaliser. L'étape E1 est détaillée ci-après en référence à la figure 3A.

La figure 3A montre, à titre d'exemple, les contours de cellules adjacentes C1 à C5 rattachés à un ou plusieurs satellites d'une même orbite, et la trajectoire T(i) de l'usager UG(i) au travers des cellules C1 à C5. Ces cellules sont typiquement de formes différentes et de tailles différentes et présentent entre elles des zones de chevauchement signalées par des hachures dans la figure 3A. L'affectation de l'usager UG(i) aux cellules est choisie selon trois critères CR1, CR2 et CR3.

Le premier critère CR1 impose à l'usager, lorsqu'il est affecté à une cellule donnée, de rester le plus longtemps possible affecté à la cellule donnée et n'être transféré dans une cellule suivante, c'est-à-dire commencer à utiliser un canal de la cellule suivante, que lorsque l'usager a atteint la limite de ladite cellule donnée. Ainsi, à la figure 3A, l'usager UG(i) effectuant une demande d'établissement de communication en un point $X_0(i)$ dans la cellule C1 reste affecté à cette cellule jusqu'en un point de transfert P1 situé à l'intersection de la trajectoire T(i) et du contour de la cellule C1.

Selon le second critère CR2, lorsque l'usager en sortie d'une cellule pénètre dans une zone de chevauchement de plusieurs cellules, il est affecté à la cellule dans laquelle il peut parcourir la plus grande distance, c'est-à-dire dans laquelle le temps de passage de l'usager est le plus long. Dans l'exemple illustré, l'usager UG(i), une fois sorti de la cellule C1, entre dans une zone de chevauchement entre les cellules C2 et C3. L'usager est alors transféré dans la cellule C2, et non pas dans la cellule C3, et reste affecté à la cellule C2 jusqu'en un point de transfert P2 d'intersection entre la trajectoire T(i) et le contour de la cellule C2. Ce second critère CR2 est appliqué également pour le choix de la première cellule d'affectation lorsque le point $X_0(i)$ se situe dans une zone de chevauchement.

Selon le troisième critère CR3, lorsque l'usager UG(i) peut être affecté à plusieurs cellules chevauchantes en un point de la trajectoire T(i) et les distances qu'il peut parcourir dans ces cellules chevauchantes sont égales, comme illustré par les cellules C4 et C5 en sortie de la cellule C2 à la figure 3A, l'usager est affecté à la cellule parmi lesdites cellules chevauchantes à laquelle est attribuée la plus grande capacité en canaux de communication, quels que soient les états libres ou occupés de ces canaux.

Ce processus d'affectation est poursuivi jusqu'à un point limite $P_L(i)$ de la trajectoire T(i) situé à la distance $L_\tau(i)$ de $X_0(i)$. En pratique toutefois, les cellules ne se chevauchent le plus souvent que deux-à-deux. Dans ce cas le second critère n'est utilisé que pour déterminer la première cellule d'affectation.

La figure 3B montre seulement les cellules auxquelles l'usager est successivement affecté le long de la trajectoire T(i) qui seront désignées par C[1] à C[J] respectivement dans la suite de la description, la dernière cellule C[J] contenant le point $P_L(i)$ précité. J est un entier dépendant de la distance prédéterminée $L_\tau(i)$ et donc de la durée prédéterminée $\tau(i)$ et désignant le nombre maximal de cellules pour lesquelles le procédé conforme à l'invention est appliqué à l'usager UG(i).

Afin de mieux comprendre le déroulement de l'algorithme conforme à l'invention, on définit les notations suivantes dont certaines sont illustrées aux figures 3B, 4 et 5 :

- $X_h(i)[j-1,j]$ : point de transfert prédéterminé de la communication de l'usager UG(i) de la cellule C[j-1] vers la cellule C[j], dit également point de transfert de l'usager UG(i) dans la cellule C[j]. Ce point est déterminé à l'étape E1.

  Pour la première cellule C[1] à laquelle l'usager UG(i) est affecté, le point de transfert $X_h(i)[0,1]$ est égal à $X_0(i)$.

  Un point de transfert $X_h(i)[J,J+1]$ vers une cellule succédant à la cellule C[J] est en outre défini selon le critère CR1.

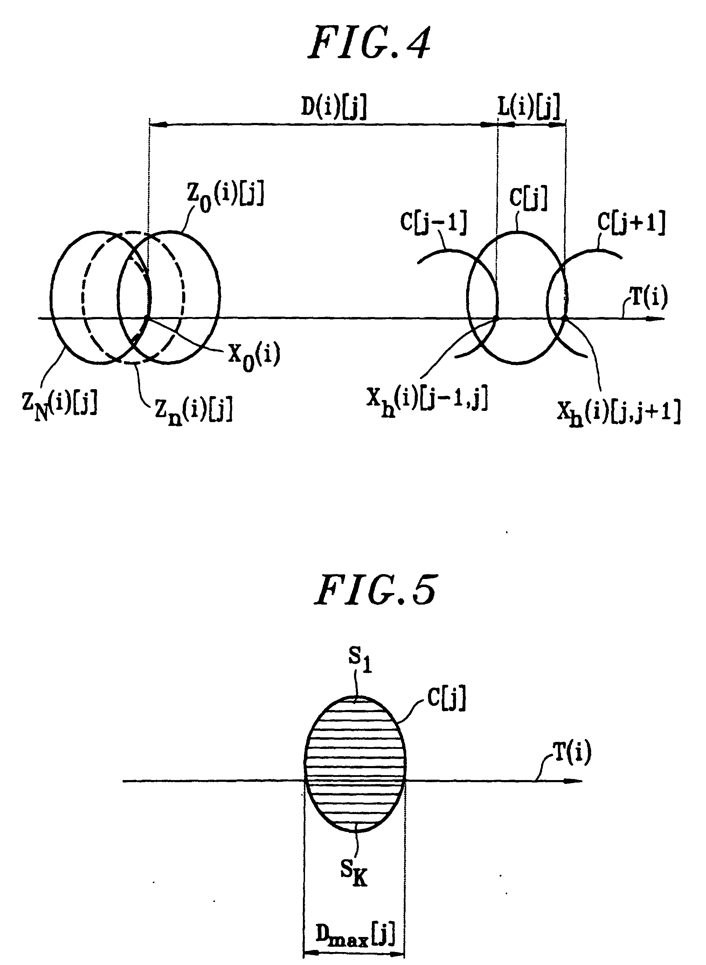

- D(i)[j] : distance séparant l'usager UG(i) du point de transfert $X_h(i)[j-1,j]$ dans la cellule C[j] lors de la demande d'établissement de communication, comme montré à la figure 4. Cette distance est égale à $X_h(i)[j-1,j] - X_0(i)$ lorsque l'usager UG(i) est en dehors de la cellule C[j] à l'instant de la demande d'établissement de communication, et à 0 si l'usager est déjà sur le contour ou à l'intérieur de la cellule C[j] à ce même instant.

- L (i) [j] : longueur du parcours de l'usager UG(i) dans la cellule C[j] le long de la trajectoire T(i), comme montré à la figure 4. Cette longueur est égale à $X_h(i)[j,j+1] - X_h(i)[j-1,j]$.

- $D_{max}[j]$ : distance maximale que peut parcourir un usager dans la cellule C[j]. Cette distance montrée à la figure 5, est égale à la longueur maximale de la cellule C[j] parallèlement à la trajectoire T(i), et est préalablement déterminée en calculant la longueur maximale de K segments $S_1$ à $S_K$ parallèles à la trajectoire T(i) inclus dans la cellule C[j] et délimités par le contour de la cellule C[j].

- $Z_0$ (i) [j] : zone obtenue par translation de la cellule C[j] suivant une direction opposée à celle de la trajectoire T(j), c'est-à-dire suivant la direction de déplacement des satellites relativement à la terre, de la distance D(i)[j]. Cette zone, avec son contour, inclut le point $X_0(i)$.

- $Z_n$(i) [j] : zone montrée à la figure 4, obtenue par translation de la cellule C[j] suivant une direction opposée à celle de la trajectoire T(i) de la distance D (i) [j] + ($\frac{n}{N}$ x L(i)[j]), où n et N sont des entiers tels que $n \leq N$. Cette zone contient le point $X_0(i)$.

- $Z_N(i)[j]$ : zone obtenue par translation de la cellule C[j] suivant une direction opposée à celle de la trajectoire T(i) de la distance D(i) [j] + L(i) [j] = D(i)[j+1]. L'usager UG(i) au point $X_0(i)$ se trouve à la sortie de cette zone, sur son contour, lors de la demande d'établissement de communication.

- $N_{ATG}(i)\{Z_n(i)[j]\}$ : nombre d'usagers ATG présents et en cours de communication dans la zone $Z_n(i)[j]$, où n = 0 à N, et bénéficiant du service ATG pour leur transfert dans la cellule C[j], au moment de la demande d'établissement de communication de l'usager UG(i).

- CC[j] : capacité en canaux de communication de la cellule C[j], c'est-à-dire nombre de canaux attribués à cette cellule, lorsque cette capacité est constante. Si cette capacité est variable dans le temps, par exemple si la constellation est un système à allocation dynamique de canaux, CC[j] désigne la capacité maximale pouvant être attribuée à la cellule C [j]. Le nombre $N_{ATG}(i) \{Z_n(i)[j]\}$ est toujours inférieur ou égal à CC[j].

- W[j] : mémoire tampon configurée en file FIFO et recevant des demandes de réservation de canal des usagers ATG pour la cellule C[j].

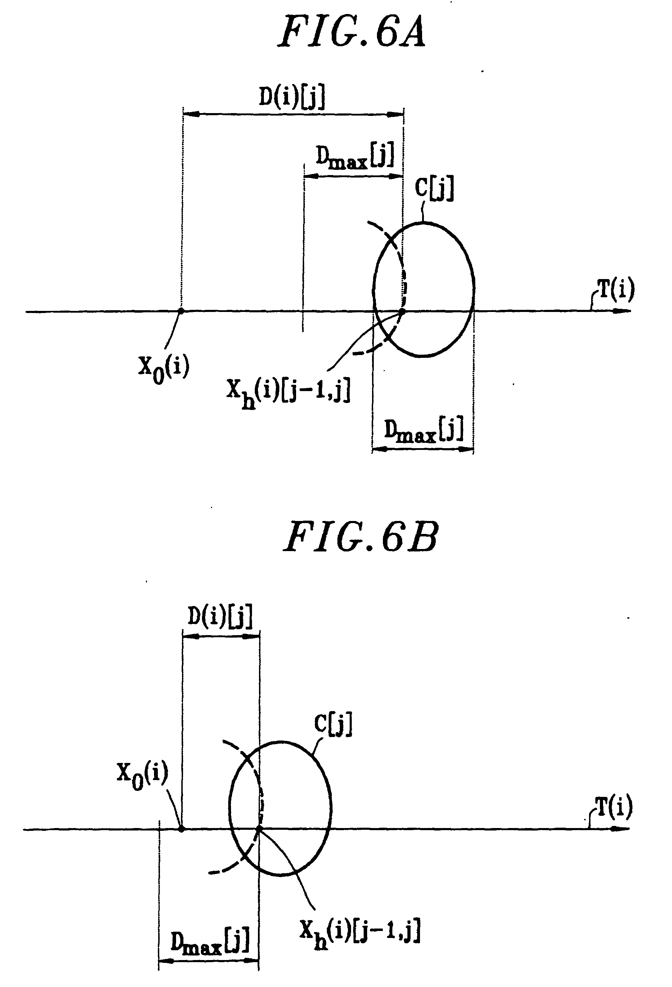

En référence de nouveau à la figure 2, pour chaque cellule C[j] déterminée par j = 1 à J (étape E2), que l'usager UG(i) est susceptible de traverser pendant une communication, la distance D(i)[j] séparant l'usager UG(i) de son point de transfert $X_h(i)[j-1,j]$ dans la cellule C[j] à l'instant de la demande d'établissement de communication est comparée à $D_{max}[j]$ à l'étape de test E3. Si l'usager UG(i) se trouve à cet instant à une distance de son point de transfert dans la cellule C[j] supérieure ou égale à $D_{max}[j]$ comme illustré à la figure 6A, alors l'algorithme passe à l'étape E4 et à l'étape E8 simultanément. A l'étape E4, si l'usager n'est pas à la distance $D_{max}[j]$ de son point de transfert $X_h(i)[j-1,j]$ dans la cellule C[j], le terminal de l'usager UG(i) attend de s'y trouver pour effectuer une demande de réservation d'un canal dans cette cellule. L'information de position est fournie au terminal par la station terrienne de commande SC sous forme d'un message de signalisation transmis dans un canal de signalisation d'un faisceau montant de la station de commande SC ou d'une station relais recevant ce message de la station de commande SC, vers le satellite en visibilité de l'usager UG(i) et du satellite vers le terminal de l'usager UG(i) dans un canal de signalisation d'un faisceau descendant. Le terminal de l'usager UG(i) attend ainsi le message de signalisation précité pour effectuer sa demande de réservation de canal. En variante, la station de commande SC effectue la demande de réservation de canal dans la cellule C[j] pour le terminal de l'usager UG(i).

Dans ces conditions, à l'instant où l'usager UG (i) sera transféré dans la cellule C[j], c'est-à-dire atteindra le point de transfert $X_h(i)[j-1,j]$, tous les usagers, ATG ou non-ATG, en cours de communication dans la cellule C[j] lors de la demande de réservation de canal de l'usager UG(i) auront quitté la cellule C[j] et ne seront donc plus affectés à la cellule C[j].

La demande de réservation de canal est placée dans la mémoire tampon configurée en file W[j] associée à la cellule C[j]. Si la mémoire W[j] est vide lors de l'entrée de la demande de réservation de l'usager UG(i) dans celle-ci et s'il existe au moins un canal libre, c'est-à-dire un canal non-occupé et non-réservé, attribué à la cellule C[j], ce canal libre est immédiatement réservé pour le terminal de l'usager UG(i) et sera occupé par la communication de l'usager lorsque l'usager UG(i) aura atteint son point de transfert $X_h(i)[j-1,j]$ dans la cellule C[j].

La mémoire W[j] ne contient que des demandes de réservation de canal dans la cellule C[j] émises par des terminaux d'usager ATG bénéficiant du service ATG pour le transfert dans la cellule C[j]. En effet, comme déjà précisé, chaque usager ATG UG(i) ne bénéficie du service ATG que pendant une durée prédéterminée $\tau(i)$ correspondant à une distance prédéterminée $L_\tau$ (i) et donc à un nombre de cellules prédéterminé J sur la trajectoire T(i). Au-delà de la distance prédéterminée $L_\tau$ (i), les transferts de l'usager, ou de ses communications, d'une cellule à l'autre ne sont plus garantis par le procédé conforme à l'invention. Le terminal de l'usager doit alors émettre une demande d'allocation de canal dans chaque cellule de façon classique à chaque fois que, par exemple, la puissance du signal qu'il reçoit dans la cellule où il est affecté devient inférieure à un seuil prédéterminé.

Les demandes de réservation de canal d'usagers ATG sont prioritaires par rapport à toute demande d'établissement de communication. Ainsi, lorsqu'un terminal d'usager quelconque effectue une demande d'établissement de communication dans la cellule C[j], il est nécessaire, pour que la demande soit acceptée, qu'il existe un canal libre, c'est-à-dire non-occupé et non-réservé, dans la cellule, et que la mémoire W[j] soit vide. En outre, dès qu'un canal est libéré dans la cellule C[j] et lorsque la mémoire W[j] contient au moins une demande de réservation, ce canal est réservé et sera alloué au terminal de l'usager correspondant à la première demande de réservation dans la mémoire W[j] lorsqu'il aura atteint son point de transfert dans la cellule C[j].

Si, à l'étape E3, la distance D(i) [j] est inférieure à $D_{max}$[j], comme illustré à la figure 6B, on vérifie à l'étape E5 s'il existe un canal de communication libre dans la cellule C[j]. Si aucun canal n'est libre dans cette cellule, l'algorithme est arrêté à l'étape E6. La demande d'établissement de communication de l'usager UG(i) est alors refusée et toutes les réservations de canal et demandes de réservation de canal concernant l'usager UG(i) effectuées pour les cellules C[1] à C[j-1] précédant la cellule C[j] suivant la trajectoire T(i) sont annulées. S'il existe au moins un canal libre dans la cellule C[j] à l'étape E5, une réservation de ce canal est effectuée immédiatement par/pour le terminal de l'usager UG (i) à l'étape E7. L'algorithme passe ensuite à l'étape E8.

Les étapes E8 à E11 constituent une boucle de test itérative. Dans chaque zone $Z_n(i)[j]$ (n=0 à N), obtenue par translation de la cellule C[j] comme déjà indiqué et incluant le point $X_0(i)$, on compare à l'étape E9 le nombre $N_{ATG}(i)\{Z_n(i)[j]\}$ d'usagers ATG déjà en cours de communication et bénéficiant du service ATG pour la cellule C[j] à la capacité en canaux de communication CC[j] de la cellule C[j].

Si, à l'étape E9, le nombre d'usagers ATG précité est égal à la capacité CC[j] de la cellule C[j], l'algorithme est arrêté à l'étape E10, la demande d'établissement de communication de l'usager UG(i) est refusée et toutes les demandes de réservation de canal et réservations de canal concernant l'usager UG(i) effectuées pour les cellules C[1] à C[j] sont annulées.

Si le nombre $N_{ATG}(i)\{Z_n(i)[j]\}$ est inférieur à la capacité CC[j] de la cellule C[j] et l'entier n est inférieur à N à l'étape E11, l'entier n est incrémenté de façon à appliquer l'étape E9 à la zone $Z_{n+1}(i)[j]$ puis de façon itérative jusqu'à la zone $Z_N(i)[j]$ si le résultat des étapes E9 est toujours positif.

Si aucun arrêt de l'algorithme ne survient à l'étape E10, le cycle incluant les étapes E2 à E11 est recommencé à l'étape E12 pour une cellule suivante C [j+1]. Si pour la cellule C[J], dernière cellule pour laquelle l'usager UG(i) a droit au service ATG, la condition de l'étape E9 est vérifiée, la demande d'établissement de communication de l'usager UG(i) est acceptée à l'étape E13. On est en effet certain à cet instant que ni la communication de l'usager UG(i) ni les communications des autres usagers ATG déjà acceptées ne seront interrompues lors du transfert de l'usager UG(i) d'une cellule à l'autre pendant la durée prédéterminée τ(i), puisque dans chaque cellule où l'usager UG(i) sera transféré, le nombre total d'usagers ATG en cours de communication dans cette cellule ne dépassera en aucun cas la capacité de cette cellule.

De préférence, dans le cas où la condition de l'étape E3 est vérifiée pour le transfert de l'usager UG (i) dans une cellule C[j], c'est-à-dire si D(i)[j] ≥ $D_{max}$[j], les étapes E4 et E8 ne sont mises en oeuvre que si, à une étape E34, le nombre $N_{ATG}(i)\{Z_0(i)[j]\}$ d'usagers ATG en cours de communication dans la zone $Z_0(i)[j]$ à l'instant de la demande d'établissement de communication du terminal de l'usager UG(i) et bénéficiant du service ATG pour leur transfert dans la cellule C[j] est inférieur à la capacité CC[j] de la cellule C[j]. Si le nombre $N_{ATG}(i)\{Z_0(i)[j]\}$ est égal à CC[j], l'algorithme est arrêté à l'étape E34', la demande d'établissement de communication de l'usager UG(i) est refusée et toutes les demandes de réservations de canal et réservations de canal précédemment effectuées pour l'usager UG(i) sont annulées.

Selon une seconde réalisation de l'invention, une étape préliminaire $E_{prel}$ réduit la surface des cellules rattachées aux satellites de la constellation, initialement délimitées par des contours correspondant à un paramètre radioélectrique constant, comme déjà indiqué.

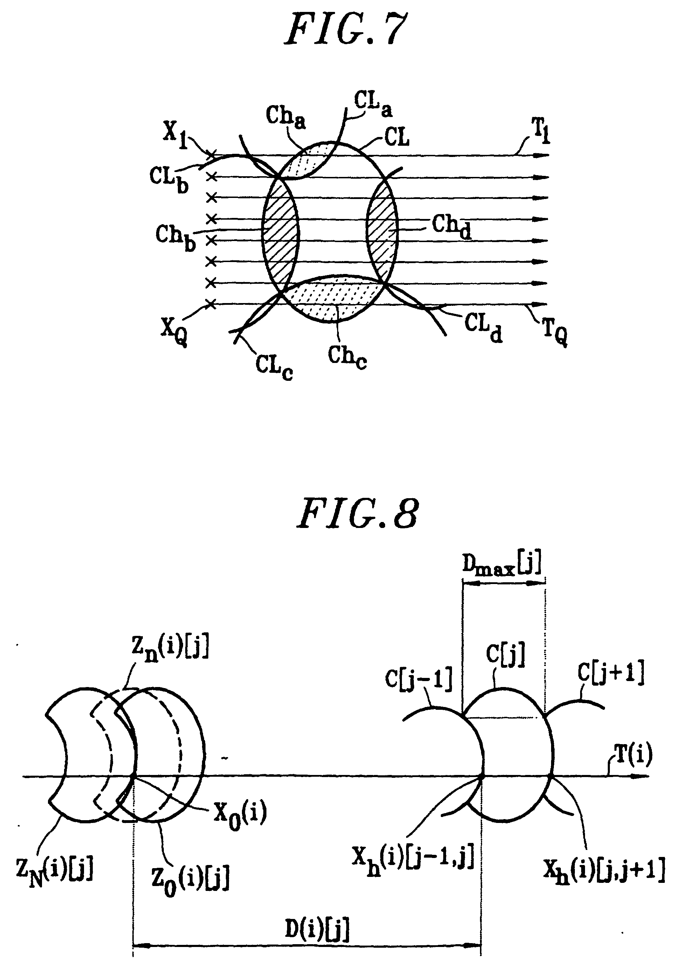

La figure 7 montre comment est réduite la surface d'une cellule quelconque CL. Pour chaque usager d'une pluralité d'usagers fictifs se déplaçant suivant des trajectoires parallèles $T_1$ à $T_Q$ dans le référentiel $R_S$ lié aux satellites, et traversant complètement au moins la cellule CL, les trois critères CR1, CR2 et CR3 définis précédemment sont appliqués afin d'affecter cet usager successivement à des cellules de la même manière que celle déjà décrite en référence à la figure 3A relative à l'étape E1 de l'algorithme. Les trajectoires $T_1$ à $T_Q$ sont choisies d'une part de façon à balayer l'ensemble de la cellule CL et d'autre part de sorte que leurs points initiaux respectifs $X_1$ à $X_Q$ soient chacun situés hors d'une zone de chevauchement. Dans chaque zone de chevauchement $Ch_a$ à $Ch_d$ entre la cellule CL et des cellules avoisinantes $CL_a$ à $CL_d$, s'il est trouvé qu'aucun usager fictif se trouvant dans cette zone le long de sa trajectoire n'est affecté à la cellule CL selon les trois critères précités, alors la zone de chevauchement est supprimée dans la cellule CL. Dans l'exemple illustré, les zones de chevanchement $Ch_a$ et $Ch_b$ sont supprimées puisque tous les usagers fictifs traversant ces zones ne sont transférés dans la cellule CL qu'après avoir atteint la limite des cellules $CL_a$ et $CL_b$ en vertu du premier critère CR1. Les zones $Ch_a$ et $Ch_b$ sont exclusivement attribuées aux cellules $CL_a$ et $CL_b$ respectivement. De même, la zone $Ch_d$ est attribuée exclusivement à la cellule CL. Par contre, la zone $Ch_c$ est maintenue comme zone de chevauchement dans les cellules CL et $CL_c$.

Toutes les étapes E1 à E13, E34 et E34' de l'algorithme de la figure 2 sont mises en oeuvre de la même manière que dans la première réalisation. Les cellules C[1] à C[J] correspondant à l'usager UG(i) sont selon cette seconde réalisation des cellules dont la surface a été préalablement réduite, comme montré à la figure 8 dans laquelle les mêmes notations qu'aux figures 3B à 6B sont utilisées à des fins de simplification. La distance prédéterminée $D_{max}[j]$ associée à la cellule réduite C[j] est déterminée préalablement d'une façon identique à celle décrite précédemment en référence à la figure 5 par le calcul du plus long parcours possible d'un usager dans cette cellule.

A l'étape E1, toutefois, lorsque l'usager UG(i) se trouve dans une zone de chevauchement de plusieurs cellules lors de sa demande d'établissement de communication, comme par exemple la zone de chevauchement $Ch_c$ montrée à la figure 7, la première cellule à laquelle il est affecté n'est pas déterminée selon le critère CR2 précité, mais est celle, parmi lesdites plusieurs cellules, atteinte la première par la trajectoire T(i). De cette manière, dans toutes les zones supprimées d'une cellule, on est certain qu'aucun usager ATG susceptible d'être présent dans l'une de ces zones ne sera affecté à cette cellule.

Aux étapes E9 et E34 de l'algorithme de la figure 2, les nombres d'usagers ATG $N_{ATG}(i)\{Z_n(i)[j]\}$ (n = 0 à N) sont déterminés dans des zones $Z_n(i)[j]$ de tailles réduites, ce qui diminue le temps de calcul et surtout permet d'éviter de prendre en compte dans chaque zone $Z_n(i)[j]$ des usagers ATG qui ne seront pas affectés à la cellule C[j] correspondante simultanément avec l'usager UG(i). La probabilité de refus de demande d'établissement de communication aux étapes E10 et E34' est ainsi réduite par rapport à la première réalisation de l'invention.

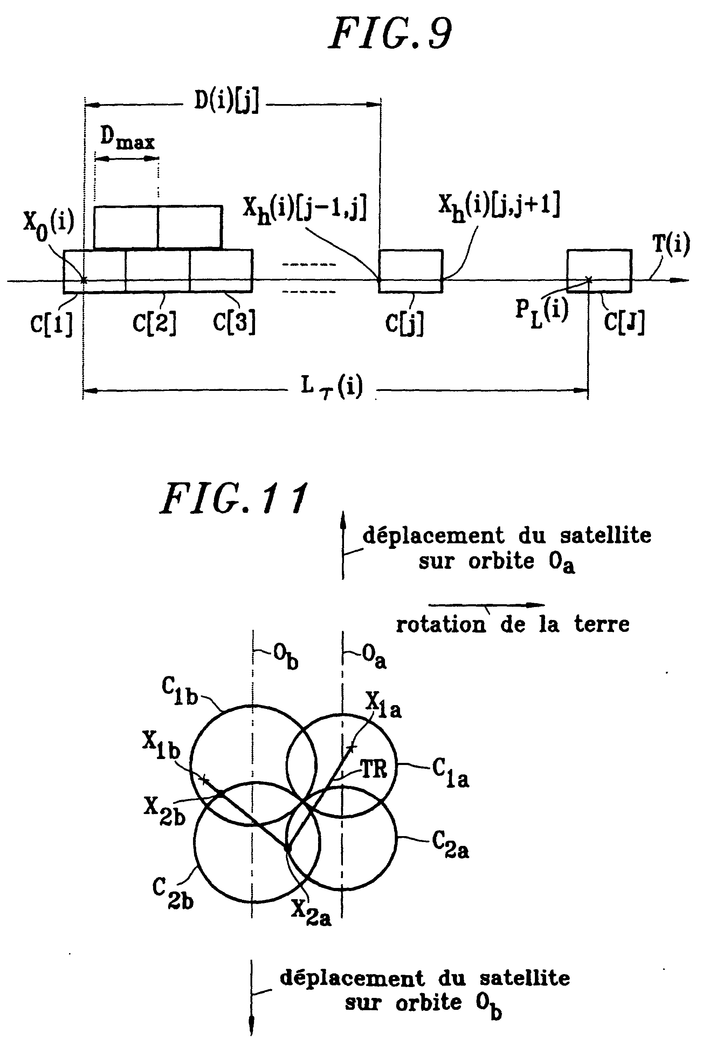

Selon une troisième réalisation de l'invention, les cellules rattachées aux satellites sont toutes identiques, de même forme rectangulaire et de même capacité en canaux de communication CC. Les cellules rectangulaires sont en outre jointives et alignées suivant la direction de déplacement des satellites relativement à la surface de la Terre, c'est-à-dire deux côtés des cellules sont parallèles à cette direction de déplacement. La figure 9 illustre ce cas particulier, dans lequel l'usager UG(i) parcourt la même distance dans chacune des cellules rectangulaires suivant sa trajectoire T(i), c'est-à-dire son temps de passage est le même dans chaque cellule. La distance maximale prédéterminée, désignée ici par $D_{max}$, est la même pour toutes les cellules rectangulaires et est égale à la longueur des côtés du rectangle parallèles à la trajectoire T(i).

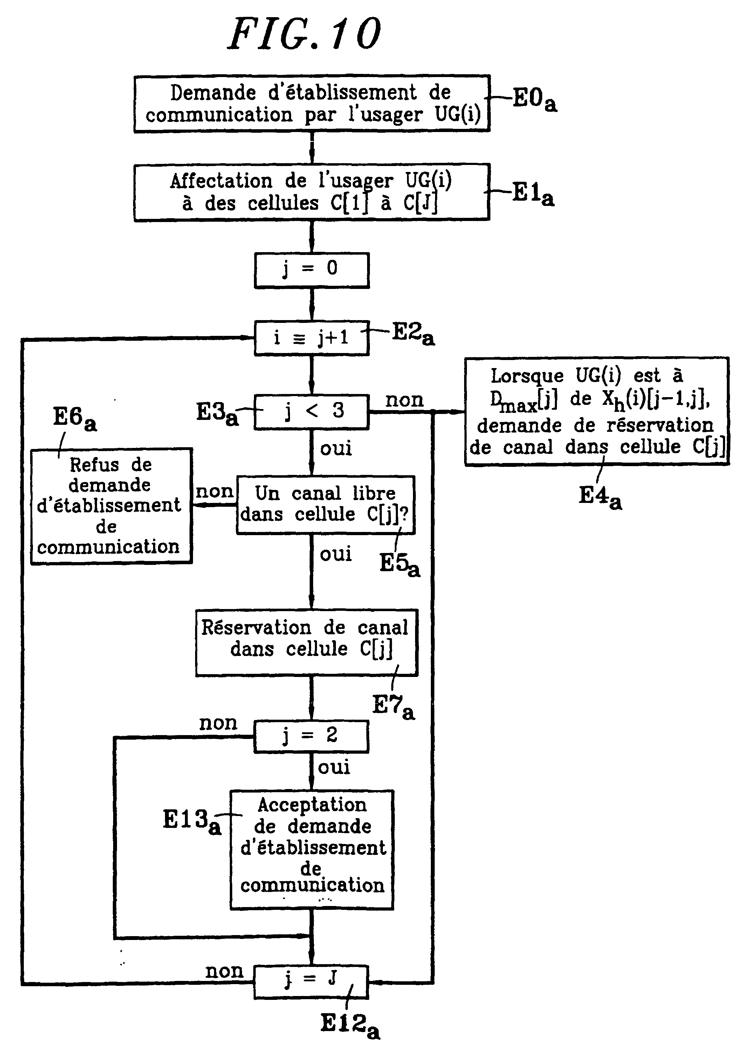

En référence à la figure 10, dans laquelle les mêmes notations que dans les figures 2 à 8 sont utilisées dans un but de simplification, l'algorithme selon cette troisième réalisation est simplifié par rapport à l'algorithme conforme à la première réalisation montré à la figure 2.

A l'étape $E1_a$ d'affectation de l'usager UG(i) à des cellules, les cellules C[1] à C[J] auxquelles l'usager est affecté sont les J premières cellules rectangulaires traversées, même partiellement, par la trajectoire T(i), l'entier J dépendant, comme décrit précédemment, de la durée $\tau(i)$ préalablement définie par l'usager UG(i). Les trois critères CR1 à CR3 utilisés dans la première réalisation ne sont pas appliqués dans cette troisième réalisation. L'étape de test E34 associée à l'étape de refus de demande d'établissement de communication E34' et les étapes E8 à E11 sont supprimées dans la troisième réalisation.

Dans chacune des deux premières cellules rectangulaires C[1] et C[2] traversées par la trajectoire T(i) de l'usager UG(i) (étapes $E2_a$ et $E3_a$), la cellule C[1] incluant le point initial $X_0(i)$, l'étape $E5_a$ vérifie s'il existe au moins un canal de communication libre. Si aucun canal n'est disponible dans l'une de ces cellules, la demande d'établissement de communication est refusée à l'étape $E6_a$, de la même manière qu'à l'étape E6. S'il existe un canal libre à l'étape $E5_a$, une réservation de ce canal est effectuée par/pour le terminal de l'usager UG(i) à l'étape $E7_a$. Si la condition de l'étape $E5_a$ est vérifiée pour les deux cellules C[1] et C[2], la demande d'établissement de communication est acceptée à l'étape $E13_a$.

Pour chacune C[j] des cellules suivantes avec $3 \leq j \leq N$, l'usager UG(i) attend de se trouver à la distance $D_{max}$ de la cellule C[j], c'est-à-dire du point d'entrée $X_h(i)[j-1,j]$ dans la cellule C[j], pour effectuer une demande de réservation de canal à l'étape $E4_a$. Ainsi, à chaque transfert de l'usager UG(i) dans la cellule C[j], une demande de réservation de canal est émise dans la cellule suivante C[j+1].

La description ci-dessus a été produite pour des cellules rattachées à des satellites placés sur une même orbite. La présente invention s'applique aussi dans le cas où l'usager UG(i) traverse des cellules rattachées à des satellites d'orbites différentes, parallèles ou concourantes et par exemple sécantes de l'équateur après projection sur la surface terrestre.

La figure 11 montre, à titre d'exemple, deux cellules $C_{1a}$ et $C_{2a}$ rattachées à un ou deux satellites se déplaçant sur une orbite $O_a$, et deux cellules $C_{1b}$, $C_{2b}$ rattachées à un ou deux satellites se déplaçant dans le sens inverse des cellules $C_{1a}$ et $C_{2a}$ sur une orbite $O_b$ adjacente à l'orbite $O_a$. Pour un usager quelconque UG se trouvant initialement en un point $X_{1a}$ dans la cellule $C_{1a}$ lors d'une demande d'établissement de communication effectuée par le terminal de celui-ci, une trajectoire fictive TR est définie. La trajectoire TR, déterminée selon les trois critères CR1 à CR3, comprend une première portion rectiligne $X_{1a} X_{2a}$ suivant une direction opposée à la direction du déplacement relatif des satellites sur l'orbite $O_a$ par rapport à la surface de la Terre, dont le point d'extrémité $X_{2a}$ est situé sur le contour de la cellule $C_{2a}$. Une seconde portion rectiligne $X_{2a}X_{1b}$ de la trajectoire TR est dirigée suivant une direction opposée à la direction du déplacement relatif des satellites sur l'orbite $O_b$ par rapport à la surface de la Terre.

L'algorithme de la figure 2 est appliqué à l'usager UG comme décrit ci-dessus. Toutes les distances sont toutefois prises le long de sa trajectoire brisée TR, et les translations de cellules sont effectuées en suivant également la trajectoire TR. Ainsi, la longueur de la trajectoire TR, égale à la somme des longueurs des portions $X_{1a}X_{2a}$ et $X_{2a}X_{1b}$, est la longueur prédéterminée maximale définie à l'avance par l'usager UG. La distance, par exemple, entre l'usager UG lors de sa demande d'établissement de communication et son point de transfert dans la cellule $C_{1b}$, désigné par $X_{2b}$, est égale à la somme des longueurs des portions $X_{1a}X_{2a}$ et $X_{2a}X_{2b}$.

## Revendications

1.  Procédé de transfert de communications d'usagers (UG(i)) dans un système de télécommunications cellulaire à constellation de satellites non-géostationnaires avec cellules rattachées aux satellites, lesdites cellules (CL1, CL2), auxquelles des canaux de communication sont respectivement associés, se déplaçant relativement à la surface de la Terre suivant une direction prédéterminée, la vitesse d'usagers par rapport à la surface de la Terre étant négligée devant la vitesse de déplacement des cellules, les usagers ayant des positions ($X_0(i)$) connues lors de chacune des demandes d'établissement de communication émises par des terminaux des usagers,

    **caractérisé en ce qu'**il comprend pour un usager donné (UG(i)) après une demande d'établissement de communication émise par le terminal de l'usager donné et après une détermination de chacune (C[j]) des cellules adjacentes (C[1] à C[J]) auxquelles ledit usager donné (UG(i)) est susceptible d'être successivement affecté et formant un groupe prédéterminé, l'usager donné se trouvant dans une première cellule (C[1]) dudit groupe prédéterminé lors de ladite demande d'établissement de communication :

    -   des premières étapes selon lesquelles si une première distance (D(i)[j]) entre ledit usager donné et un point de transfert prédéterminé ($X_h$(i)[j-1,j]) dans ladite chaque cellule (C[j]) lors de ladite demande d'établissement de communication, ladite première distance étant nulle lorsque ladite chaque cellule est ladite première cellule dudit groupe prédéterminé, est supérieure (E3) à une distance prédéterminée ($D_{max}$[j]) égale à une longueur maximale de ladite chaque cellule (C[j]) parallèlement à ladite direction prédéterminée, une réservation d'un canal de communication associé à ladite chaque cellule (C[j]) est demandée (E4) pour/par ledit terminal (C[j]) lorsque ledit usager donné (UG(i)) se trouve sensiblement à ladite distance prédéterminée dudit point de transfert prédéterminé ($X_h$(i)[j-1,j]), et

    si ladite première distance (D(i)[j]) est inférieure à ladite distance prédéterminée ($D_{max}$[j]), (i) ladite demande d'établissement de communication est refusée (E6) si aucun canal de communication associé à ladite chaque cellule (C[j]) n'est libre, et, (ii) sinon, un canal de communication est réservé (E7) pour/par ledit terminal,

    -   des secondes étapes selon lesquelles ladite demande d'établissement de communication est refusée (E10) et toutes les réservations de canal et réservations de canal concernant l'usager sont annulées si un nombre d'usagers ($N_{ATG}$(i){$Z_n$(i)[j]}) en cours de communication et inclus dans l'une de zones ($Z_n$(i)[j]) obtenues par translation de ladite chaque cellule (C[j]) suivant ladite direction prédéterminée d'une distance comprise entre ladite première distance (D(i)[j]) et une seconde distance (D(i)[j+1]) est au moins égal (E9) à une capacité en canaux de communication (CC[j]) de ladite chaque cellule, ladite seconde distance (D(i)[j+1]) étant celle entre ledit usager donné et un point de transfert prédéterminé ($X_h$(i)[j,j+1]) dudit usager donné (UG(i)) dans une cellule d'affectation (C[j+1]) succédant à ladite chaque cellule (C[j]) lors de ladite demande d'établissement de communication.

2.  Procédé conforme à la revendication 1, selon lequel si, lors de ladite demande d'établissement de communication, ladite première distance (D(i)[j]) est supérieure à ladite distance prédéterminée ($D_{max}$[j]), ladite réservation d'un canal de communication n'est demandée que si un nombre d'usagers en cours de communication ($N_{ATG}$(i){$Z_0$(i)[j]}) inclus dans une zone obtenue par translation de ladite chaque cellule (C[j]) suivant ladite direction prédéterminée de ladite première distance (D(i)[j]) et si les groupes prédéterminés de cellules respectivement auxquels lesdits usagers en cours de communication dans ladite zone soient susceptibles d'être affectés incluent de préférence ladite chaque cellule, est inférieur à la capacité en canaux de communication (CC[j]) de ladite chaque cellule (C[j]).

**3.** Procédé conforme à la revendication 1 ou 2, selon lequel ledit groupe prédéterminé de cellules adjacentes (C[1] à C[J]) est constitué de sorte que ledit usager donné (UG(i)) ne soit transféré dans ladite chaque cellule (C[j]), lorsque ladite chaque cellule est une cellule autre que ladite première cellule dudit groupe prédéterminé, qu'après être resté affecté le plus longtemps possible à une cellule précédente (C[j-1]).

**4.** Procédé conforme à l'une quelconque des revendications 1 à 3, selon lequel ledit groupe prédéterminé de cellules adjacentes (C[1] à C[J]) est constitué de sorte que lorsque, en sortie d'une cellule dudit groupe prédéterminé, ledit usager donné est inclus simultanément dans plusieurs cellules dudit système de télécommunications, la cellule parmi lesdites plusieurs cellules à laquelle l'usager donné est affecté soit celle dans laquelle le temps de passage de l'usager donné est le plus long.

**5.** Procédé conforme à l'une quelconque des revendications 1 à 4, comprenant une étape ($E_{prel}$) pour supprimer préalablement dans chacune des cellules dudit système de télécommunications au moins une zone de chevauchement avec une autre cellule dudit système de télécommunications.

**6.** Procédé conforme à la revendication 1, selon lequel ledit nombre d'usagers en cours de communication ($N_{ATG}(i)\{Z_h(i)[j]\}$) concerne seulement des usagers dont les groupes prédéterminés de cellules adjacentes incluent ladite chaque cellule (C[j]).

**7.** Procédé conforme à l'une quelconque des revendications 1 à 6, selon lequel le nombre de cellules incluses dans ledit groupe prédéterminé de cellules adjacentes (C[1] à C[J]) dépend d'une durée de communication maximale prédéterminée ($\tau(i)$) au cours de laquelle ledit procédé est appliqué pour ledit usager donné (UG(i)) pour chaque demande d'établissement de communication émise par le terminal de l'usager donné.

**Claims**

**1.** A method of handing over calls of users (UG(i)) in a cellular telecommunications system using a constellation of non-geostationary satellites and satellite-fixed cells (CL1, CL2) with which call channels are respectively associated and which move relative to the surface of the Earth in a predetermined direction, the speed of users relative to the surface of the Earth being negligible in comparison to the speed of travel of the cells, the users having positions ($X_0(i)$) known at the time of each of call set-up requests transmitted by user's terminals,

**characterized in that** it includes, for a given user (UG(i)) after a call set-up request transmitted by the terminal of the given user and after a determination of each (C[j]) of adjacent cells (C[1] to C[J]) to which said given user (UG(i)) may be successively allocated and forming a predetermined group, the given user being in a first cell (C[1]) of said predetermined group at the time of said call set-up request:

- first steps wherein, if a first distance (D(i) [j]) between said given user and a predetermined handover point ($X_h$ (i) [j-1,j]) into said each cell (C[j]) at the time of said call set-up request, said first distance being zero if said each cell is said first cell of said predetermined group, is greater (E3) than a predetermined distance ($D_{max}[j]$) equal to a maximal length of said each cell (C[j]) parallel to said predetermined direction, a reservation of a call channel associated with said each cell (C[j]) is requested (E4) for/by said terminal (C[j]) if said given user (UG(i)) is substantially at said predetermined distance from said predetermined handover point ($X_h(i)$ [j-1,j]), and

  if said first distance (D(i)[j]) is less than said predetermined distance ($D_{max}[j]$), (i) said call set-up request is refused (E6) if no call channel associated with said each cell (C[j]) is free and, otherwise, (ii) a call channel is reserved (E7) for/by said terminal,

- second steps wherein said call set-up request is refused (E10) and all the channel reservations and channel reservations relating to the user are cancelled if a number of users ($N_{ATG}(i)\{Z_n(i)[j]\}$) communicating in one of areas ($Z_n(i)[j]$) obtained by translating said each cell (C[j]) in said predetermined direction by a distance lying between said first distance (D(i)[j]) and a second distance (D(i)[j+1]) is at least equal (E9) to a capacity in terms of call channels (CC[j]) of said each cell, said second distance (D(i)[j+1]) being that between said given user and a predetermined handover point ($X_h(i)[j,j+1]$) of said given user (UG(i)) into an allocation cell (C[j+1]) succeeding said each cell (C[j]), at the time of said call set-up request.

**2.** A method according to claim 1, wherein if, at the time of said call set-up request, said first distance (D(i)[j]) is greater than said predetermined distance ($D_{max}[j]$), said reservation of a call channel is requested only if a number of users communicating ($N_{ATG}(i)\{Z_0(i)[j]\}$) in an area obtained by translating said each cell (C[j]) in said predetermined direction by said first distance (D(i)[j]) and if the predetermined cell groups respectively to which said users communicating in said area may be allocated include preferably said each cell, is less than the capacity in terms of call channels (CC[j]) of said each cell (C[j]).

3. A method according to claim 1 or 2, wherein said predetermined group of adjacent cells (C[1] to C[J]) is constructed so that said given user (UG(i)) is not handed over into said each cell (C[j]), if said each cell is a cell other than said first cell of said predetermined group, until after having remained allocated for as long as possible to a preceding cell (C[j-1]).

4. A method according to any one of claims 1 to 3, wherein said predetermined group of adjacent cells (C[1] to C[J]) is constructed so that if, on leaving a cell of said predetermined group, said given user is simultaneously included in plural cells of said telecommunications system, the cell from said plural cells to which said given user is allocated is that in which the travel time of said given user is the longest.

5. A method according to any one of claims 1 to 4, including a step ($E_{prel}$) for eliminating beforehand in each of cells of said telecommunications system at least one area of overlap with another cell of said telecommunications system.

6. A method according to claim 1, wherein said number of users communicating ($N_{ATG}(i)Z_h(i)[j]$) concerns only users whose predetermined groups of adjacent cells include said each cell (C[j]).

7. A Method according to any one of claims 1 to 6, wherein the number of cells included in said predetermined group of adjacent cells (C[1] to C[J]) depends on a predetermined maximal call duration ($\tau$(i)) during which said method is applied for said given user (UG(i)) for each call set-up request transmitted by said given user's terminal.

**Patentansprüche**

1. Verfahren der Übergabe von Teilnehmerverbindungen (UG(i)) in einem Mobiltelephonsystem mit nicht-geostationärer Satelliten-Konstellation mit an die Satelliten gebundenen Zellen, wobei sich die genannten Zellen (CL1, CL2), denen jeweils Nachrichtenkanäle zugeordnet sind, relativ zur Erdoberfläche in einer vorbestimmten Richtung verschieben, wobei die Geschwindigkeit der Teilnehmer relativ zur Erdoberfläche gegenüber der Verschiebungsgeschwindigkeit der Zellen vernachlässigt wird und die Teilnehmer bei ihrer jeweiligen Anmeldung eines Verbindungsaufbaus, die von den Teilnehmerendeinrichtung gesendet wird, bekannte Positionen ($X_0(i)$) haben,

**dadurch gekennzeichnet, dass** es für einen gegebenen Teilnehmer (UG(i)) nach einer Anmeldung eines Verbindungsaufbaus, die von der Endeinrichtung des gegebenen Teilnehmers gesendet wurde und nach einer Bestimmung jeder (C[j]) der Nachbarzellen (C[1] bis C[J]), denen der genannte Teilnehmer (UG(i)) eventuell nacheinander zugeordnet wird und die eine vorbestimmte Gruppe bilden, wobei sich der gegebene Teilnehmer bei der genannten Anmeldung eines Verbindungsaufbaus in einer ersten Zelle (C[1]) der genannten vorbestimmten Gruppe befindet, umfasst:

- erste Schritte, in denen, wenn ein erster Abstand (D(i)[j]) zwischen dem genannten gegebenen Teilnehmer und einem vorbestimmten Übergabepunkt ($X_h(i)[j-1,j]$) in der genannten jeden Zelle (C[j]) bei der genannten Anmeldung eines Verbindungsaufbaus, wobei der genannte erste Abstand gleich Null ist, wenn die genannte jede Zelle die genannte erste Zelle der genannten vorbestimmten Gruppe ist, größer ist (E3), als ein vorbestimmter Abstand ($D_{max}$[j]), der einer maximalen Länge der genannten jeden Zelle (C[j]) parallel zur genannten vorbestimmten Richtung gleich ist, eine Reservierung eines Nachrichtenkanals, der der genannten jeden Zelle (C[j]) zugeordnet ist, für die/von der genannten Endeinrichtung (C[j]) angemeldet wird (E4), wenn der genannte gegebene Teilnehmer ((UG(i)) sich im Wesentlichen im genannten vorbestimmten Abstand vom genannten vorbestimmten Übergabepunkt ($X_h(i)[j-1,j]$) befindet, und

wenn der genannte erste Abstand (D(i)[j]) geringer ist, als der genannte vorbestimmte Abstand ($D_{max}$[j]), (i) die genannte Anmeldung eines Verbindungsaufbaus abgewiesen wird (E6), wenn kein der genannten jeden Zelle (C[j]) zugeordneter Nachrichtenkanal frei ist, und (ii) anderenfalls ein Nachrichtenkanal für die/von der genannten Endeinrichtung reserviert wird (E7),

- zweite Schritte, in denen die genannte Anmeldung eines Verbindungsaufbaus abgewiesen wird (E10) und alle Kanalreservierungen und Kanalreservierungen, die den Teilnehmer betreffen, annulliert werden, wenn eine Anzahl von Teilnehmern ($N_{ATG}(i)(Z_n(i)[j])$) in laufenden Verbindungen, die sich in einer der Zonen ($Z_n(i)[j]$) befinden, die durch Translation der genannten jeden Zelle (C[j]) in der genannten vorbestimmten Richtung um einen Abstand erhalten werden, der zwischen dem genannten ersten Abstand (D(i)[j]) und einem zweiten Abstand (D(i)[j+1]) liegt, einer Kapazität an Nachrichtenkanälen (CC[j]) der genannten jeden Zelle mindestens gleich ist (E9), wobei der genannte zweite Abstand (D(i)[j+1]) derjenige zwischen dem genannten gegebenen Teilnehmer und einem vorbestimmten Übergabepunkt (X$_h$(i)[j,j+1]) des genannten gegebenen Teilnehmers (UG(i)) in einer zugeordneten Zelle (C[j+1]) ist, die bei der genannten Anmeldung eines Verbindungsaufbaus auf die genannte jede Zelle (C[j]) folgt.

2. Verfahren nach Patentanspruch 1, nach dem die genannte Reservierung eines Nachrichtenkanals, wenn bei der genannten Anmeldung eines Verbindungsaufbaus der genannte erste Abstand (D(i)[j]) größer ist, als der genannte vorbestimmte Abstand (D$_{max}$[j]), nur angemeldet wird, wenn eine Anzahl von Teilnehmern (N$_{ATG}$(i){Z$_0$(i)[j]}) in laufenden Verbindungen, die sich in einer Zone befinden, die durch Translation der genannten jeden Zelle (C[j]) in der genannten vorbestimmten Richtung um den genannten ersten Abstand (D(i)[j]) erhalten wird, geringer ist, als die Kapazität an Nachrichtenkanälen (CC[j]) der genannten jeden Zelle (C[j]) und wenn die vorbestimmten Gruppen von Zellen, denen die genannten Teilnehmer in laufenden Verbindungen in der genannten Zone eventuell zugewiesen werden, vorzugsweise die genannte jede Zelle enthalten.

3. Verfahren nach Patentanspruch 1 oder 2, nach dem die genannte vorbestimmte Gruppe von Nachbarzellen (C(1) bis C[J]) derart aufgebaut ist, dass der genannte gegebene Teilnehmer (UG(i)) an die genannte jede Zelle (C[j]) nur übergeben wird, wenn die genannte jede Zelle eine andere Zelle ist, als die genannte erste Zelle der genannten vorbestimmten Gruppe, nachdem sie solange wie möglich einer vorangehenden Zelle (C[j-1]) zugeordnet geblieben ist.

4. Verfahren nach irgendeinem der Patentansprüche 1 bis 3, nach dem die genannte vorbestimmte Gruppe von Nachbarzellen (C[1] bis C[J]) derart aufgebaut ist, dass wenn sich der genannte gegebene Teilnehmer beim Verlassen einer Zelle der genannten vorbestimmten Gruppe gleichzeitig in mehreren Zellen des genannten Fernmeldesystems befindet, die Zelle unter den genannten mehreren Zellen, der der Teilnehmer zugeordnet wird, diejenige ist, in der die Verweildauer des gegebenen Teilnehmers am längsten ist.

5. Verfahren nach irgendeinem der Patentansprüche 1 bis 4, einen Schritt (E$_{prel}$) umfassend, in dem zunächst in jeder der Zellen des genannten Fernmeldesystems mindestens eine Überlappungszone mit einer anderen Zelle des genannten Fernmeldesystems unterdrückt wird.

6. Verfahren nach Patentanspruch 1, in dem die genannte Anzahl von Teilnehmern in laufenden Verbindungen (N$_{ATG}$(i){Z$_h$(i)[j]}) nur Teilnehmer betrifft, deren vorbestimmte Gruppen von Nachbarzellen die genannte jede Zelle (C[j]) enthalten.

7. Verfahren nach irgendeinem der Patentansprüche 1 bis 6, nach dem die Anzahl von Zellen, die in der genannten vorbestimmten Gruppe von Nachbarzellen (C[1] bis C[J]) enthalten sind, von einer vorher bestimmten maximalen Verbindungsdauer ($\tau$(i)) abhängt, während derer das genannte Verfahren für den genannten gegebenen Teilnehmer (UG(i)) für jede Anmeldung eines Verbindungsaufbaus, die von der Endeinrichtung des gegebenen Teilnehmers ausgesandt wird, angewandt wird.

FIG.1

S1  S2  OR

$R_S$

F1  F2

UG(i)

ST2

ST1

ZC1  SC  ZC2

CL1  CL2

RTM — RESEAU DE TELEPHONES MOBILES

RESEAU TELEPHONIQUE COMMUTE — RTC

UGd

EP 0 836 289 B1

**FIG.2**

$$\text{Réduction de la surface des cellules} \quad \text{E}_{\text{prel}}$$

Demande d'établissement de communication par l'usager UG(i) — E0

Affectation de l'usager UG(i) à des cellules C[1] à C[J] — E1

$$j = 0$$

$$j \equiv j+1 \quad \text{E2}$$

**E3**

non $\quad D(i)[j] \geqslant D_{max}[j] \quad$ oui

**E6**

Refus de demande d'établissement de communication

non

Un canal libre dans cellule C[j] ? — E5

oui

**E34'**

non $\quad$ Refus de demande d'établissement de communication

$$N_{ATG}(i)\{Z_0(i)[j]\} < CC[j] \quad \text{E34}$$

oui

E7 — Réservation de canal dans cellule C[j]

Lorsque UG(i) est à $D_{max}[j]$ de $X_h(i)[j-1,j]$, demande de réservation de canal dans cellule C[j]

**E4**

$$n = -1$$

$$n \equiv n+1 \quad \text{E8}$$

E9 — $N_{ATG}(i)\{Z_n(i)[j]\} < CC[j] \quad$ non $\quad$ Refus de demande d'établissement de communication — E10

oui

non $\quad n = N \quad$ E11

oui

non $\quad j = J \quad$ E12

oui

Acceptation de demande d'établissement de communication — E13

## *FIG.3A*

## *FIG.3B*

# FIG.4

# FIG.5

## FIG.6A

## FIG.6B

# FIG.7

# FIG.8

## FIG.9

$D(i)[j]$

$D_{max}$

$X_0(i)$

$X_h(i)[j-1,j]$

$X_h(i)[j,j+1]$

$T(i)$

$C[1]$   $C[2]$   $C[3]$   $C[j]$   $P_L(i)$   $C[J]$

$L_T(i)$

## FIG.11

déplacement du satellite
sur orbite $O_a$

rotation de la terre

$O_b$   $O_a$

$C_{1b}$   $X_{1a}$

$X_{1b}$   TR   $C_{1a}$

$X_{2b}$   $C_{2a}$

$C_{2b}$   $X_{2a}$

déplacement du satellite
sur orbite $O_b$

# FIG.10

```
Demande d'établissement de          — E0a
communication par l'usager UG(i)

Affectation de l'usager UG(i)       — E1a
à des cellules C[1] à C[J]

j = 0

i ≡ j+1          — E2a
```

E3a — j < 3 — non → Lorsque UG(i) est à $D_{max}[j]$ de $X_h(i)[j-1,j]$, demande de réservation de canal dans cellule C[j] — E4a

oui

E6a — Refus de demande d'établissement de communication ← non — Un canal libre dans cellule C[j]? — E5a

oui

Réservation de canal dans cellule C[j] — E7a

non ← j = 2

oui

E13a — Acceptation de demande d'établissement de communication

non — j = J — E12a